# EUROPEAN PATENT APPLICATION

(11) **EP 3 493 355 A1**
(43) Date of publication of application: **05.06.2019**
(21) Application number: 17382820.3
(22) Date of filing: 01.12.2017
(51) Int. Cl.: H02J 4/00, H02J 7/00, H02J 13/00

(54) **SYSTEM ARCHITECTURE FOR ENERGY DISTRIBUTION IN A NODE OF A PEER-TO-PEER ENERGY NETWORK**

(71) Applicant: Telefonica Innovacion Alpha S.L, 28013 Madrid (ES)
(72) Inventor: Phoel, Wayne, 28013 Madrid (ES); Stalling, Lars, 28013 Madrid (ES)
(74) Representative: Carlos Hernando, Borja

(57) **Abstract**

The system comprises a set of components and a processing unit (50) to control operation thereof, the components including energy interfaces (200) to receive and/or provide electrical energy from/to a devices included in the node; one or more first electrical components (300) to direct electrical energy from at least one voltage converter (400) to the energy interfaces (200), the first electrical components (300) including a control interface (20) to allow a control plane of the node to open and/or close electrical energy connections; one or more second electrical components (500) to provide electrical energy connection between a series of electrical ports (600) and the voltage converter (400); said electrical ports (600) providing electrical energy connection to other nodes through an energy plane of the node; one instrument to measure the electrical energy flowing over the electrical ports (600); and means from which an external configuration control module is connectable.

## Description

### Field of the invention

The present invention generally relates to distributed energy networks. In particular, present invention relates to system architecture for energy distribution in a node of a peer-to-peer energy network, wherein said node comprises a plurality of devices (e.g. energy generation, storage and/or loads) and is connected to one or more other nodes of the energy network in order to provide and/or receive electrical energy thereof, and wherein the node includes an energy plane and a control plane.

### Background of the invention

Most of the electrical systems are designed for appliances and load levels in the developed world, such as 120 Volts (V) AC (alternating current), and hundreds of Watts of power. Much of the direct current (DC) literature focuses on voltage levels over 300 V, which is not safe without significant and costly circuit breakers.

48 V is human safe and has been adopted as the standard in telecommunications systems (such as cell phone base stations) and computing centers. Backup batteries from base stations are known to work on a 48 volt DC voltage. But little work exists on creating a usable electricity network at safe voltage levels.

Document [1] Architecture and System Analysis of Microgrids with Peer-to-Peer Electricity Sharing to Create a Marketplace which Enables Energy Access', Wardah Inam et al. 9th International Conference on Power Electronics (ICPE 2015 -ECCE Asia), June 2015, describes a new concept of peer-to-peer electricity sharing which creates a marketplace for electricity. In this marketplace, the people who can afford power generating sources such as solar panels can sell electricity to people who are unable to afford generating sources or who might have access to electricity but require more electricity at certain times. These ad- hoc microgrids created by sharing of resources provide affordable electricity and are enabled by a Power Management Unit (PMU) described in this paper.

Document [2[ 'A scalable dc microgrid architecture for rural electrification in emerging regions', P. Achintya Madduri et al. presents the design and experimental validation of a scalable DC microgrid architecture for rural electrification. The microgrid design has been driven by field data collected from Kenya and India. The salient features of the microgrid are distributed voltage control and distributed storage, which enable developed world grid cost parity. This paper calculates that the levelized cost of electricity for the proposed DC microgrid system will be less than $0.40 per kW-hr. It also presents experimental results from locally installed DC microgrid prototypes that demonstrate the steady state behavior, the perturbation response, and the overall efficiency of the system.

However, in low-income regions, viable solutions need to consider costs of every component. Most of the systems considered in the prior art don't worry about costs of wires, and are not so concerned about transmission and conversion losses, however these can have a significant effect on the optimization in low-margin electricity networks.

The majority of microgrids are designed and built for many loads and assumes even if the initial implementation has low load requirements, the system will grow to 100's of Watts and therefore must build in all that capability up front, at significant, typically prohibitive cost.

The concept of peer-to-peer energy trading without a large, centralized grid attached is relatively new, and existing solutions are dominated by the presence of that large grid, rather than a bottom-up scalable peer-to-peer network.

There is nothing that exists that focuses on a scalable system that starts with low load levels and low voltages and can evolve to accommodate more loads, larger loads, higher currents, and more neighbors, as users' numbers and needs increase and as they can afford more expensive equipment.

### Description of the Invention

Embodiments of the present invention provide a system architecture for energy distribution in a node of a peer-to-peer energy network, wherein said node comprises a plurality of devices and is connected to one or more other nodes of an energy network in order to provide and/or receive electrical energy thereof, and wherein the node includes an energy plane and a control plane.

In particular, the system comprises a set of components including:
- a plurality of energy interfaces, wherein each one of the plurality of energy interfaces is adapted and configured to receive and/or provide electrical energy from/to a device of said plurality of devices;
- one or more first electrical components adapted and configured to direct electrical energy from at least one voltage converter to the plurality of energy interfaces, the one or more first electrical components including a control interface adapted and configured to allow said control plane to open and/or close electrical energy connections;
- one or more second electrical components adapted and configured to provide electrical energy connection between a series of electrical ports and the at least one of voltage converter;
- said series of electrical ports adapted and configured to provide electrical energy connection to said one or more other nodes through said energy plane, wherein the series of electrical ports including connections to transfer electrical energy and connections to exchange control information;
- at least one instrument adapted and configured to measure the electrical energy flowing over the electrical ports; and
- means (e.g. a module/unit, a slot, etc.) from which an external configuration control module is connectable.

Moreover, the system also includes a processing unit operatively connected to the set of components and adapted and configured to control operation thereof.

In a preferred embodiment, the set of components are arranged at different layers of a stack model. Preferably, the stack model has four layers. For instance, the plurality of energy interfaces and said means to enable connection of the external configuration control module are located in a first layer, at the top, of the stack model; the one or more first electrical components are located in a second layer of the stack model, under the first layer; the series of voltage converters and the one or more second electrical components are located in a third layer of the stack model, under the second layer; and the series of electrical ports are located in a fourth layer of the stack model, at the bottom under the third layer.

According to the proposed system architecture, the series of electrical ports have a number of ports comprised in a range between 2 and 5 ports. Preferably the number of ports is 3 ports. Each one of the electrical ports is adapted and configured to provide connection to a different neighbor node.

In addition, each one of the series of electrical ports comprises a casing having a four-sided shape (rectangular, square, etc.). The casings are attached between them providing a hardware arrangement. Furthermore, the hardware arrangement can comprise a locking mechanism and a sensor configured to notify the processing unit whether the hardware component is locked.

In an embodiment, the system also has a display unit, for example to provide status information of the node and/or of the components, either graphically or textually. A voice interface to provide audible information can be also included.

Each one of the plurality of energy interfaces are configured to provide said energy connection at a certain voltage level and at a certain type of current. For example, the certain voltage level comprises one of 5 Volts, 12 Volts, 24 Volts, 48 Volts, 120 Volts and/or 240 Volts, and the certain type of current comprises alternating current or direct current.

Preferably, the one or more first and second electrical components comprise electrical switches.

In an embodiment, the at least one instrument is located at each electrical port of the series of electrical ports. The at least one instrument can be remotely connected to the series of electrical ports. In this case, the measurement is preferably periodically performed for each electrical port, individually.

In an embodiment, the at least one instrument comprises a device to measure voltage and current. Alternatively, the at least one instrument comprises two different instruments, a device to measure voltage and a device to measure current.

According to the proposed system the external configuration control module is adapted and configured to provide configuration parameters of the node such as schedule functions for power usage, priorities for meeting load demands if electrical energy is scarce, and, optionally, price preferences for providing/supplying electrical energy. The external configuration control module can be physically connected or wirelessly connected. In the last case, the system further comprises a wireless communication module.

In an embodiment, the system further comprises one or more adapters for the plurality of devices configured to provide control information thereof.

In the present invention, the devices may include electrical energy generation elements, electrical energy storage elements and/or electrical energy loads. The loads may include lighting systems and/or appliances including televisions, radios, kitchen appliances and refrigerators and/or heating equipment, among others. The generation elements may include solar panels, wind turbines, diesel generation systems, geothermal systems, a human-powered crank generator, etc. and the electrical energy storage elements may include batteries and/or capacitors.

Present invention enables a much more efficient distribution of electrical energy (e.g. electricity) in a resource-constrained, peer-to-peer network where upfront cost of equipment is a major, sometimes prohibitive consideration and safety is a significant concern. In addition, in such a cost-constrained situation, as is encountered in developing communities, the invention enables a much more flexible allocation of electrical energy by providing users with a minimal, but expandable hardware suite that can control the usage and flow of electricity. In addition, the invention enables a scalable network of distributed generation, storage, and loads, and it enables optimization of performance.

### Brief Description of the Drawings

The previous and other advantages and features will be more fully understood from the following detailed description of embodiments, with reference to the attached drawings, which must be considered in an illustrative and non-limiting manner, in which:
Fig. 1 is a schematic illustration of the layered stack model in which the proposed system architecture can be implemented.
Fig. 2 illustrates an embodiment of the proposed system architecture.
Figs. 3 and 4 illustrate different embodiments of the electrical ports used to provide electrical energy connection to other nodes of the energy network.
Fig. 5 illustrates an example of a configuration of the connections connecting to the electrical ports, according to an embodiment.

### Detailed Description of the Invention and of Preferred Embodiments

Presents invention provides a system architecture components and design to be installed in a node (e.g. a home) of an energy network to enable electrical energy distribution with other nodes of the energy network. The key requirement is that the system is modular to enable multiple instantiations of capability out of the same building blocks, such that capability can scale and grow without entirely replacing the system.

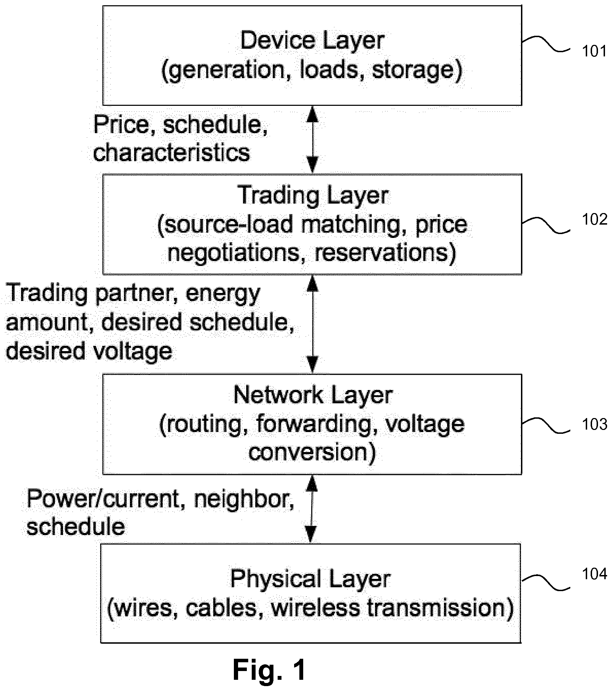

Preferably, the system is based on a layered stack model. Fig. 1 illustrates a preferred embodiment comprising four layers along with the basic functions executed at each layer. According to this embodiment at the top of the stack model is the Device Layer, or first layer, 101 including energy generation elements (e.g., solar panels, wind turbines, diesel generators, etc.), energy loads (e.g., lights, radios, televisions, etc.) and energy storage elements (batteries, capacitors, etc.) which can act as both sources and loads, as appropriate. The next layer down is the Trading Layer, or second layer, 102 which matches sources of energy (e.g. electrical energy, or electricity) to destinations according to the cost and value two nodes have for certain amounts of energy at a particular time of day. This may include prediction of need and pre-ordering of energy, as well as pre-fetching of energy for storage and later use. Below the Trading Layer 102 is the Network Layer, or third layer 103, which defines the path(s) over which energy will flow and may include storage in components such as batteries or capacitors (among other possibilities) as well as translation to appropriate voltage levels. At the bottom of the stack is the Physical Layer, or fourth layer, 104 forming the transmission medium, which may comprise wires, fiber optics, or wireless energy transmission systems.

Present invention also considers the functions to be splitted into a control plane and an energy plane of the node, where the energy plane corresponds to the actual flow of electrical energy through the system. Moreover, the invention also considers both a logical and a physical interface, where the logical interface applies to the control plane and the physical interface applies to both the control and energy planes. The physical connections used for control can be the same as those used for electrical energy, or separate connections can be implemented.

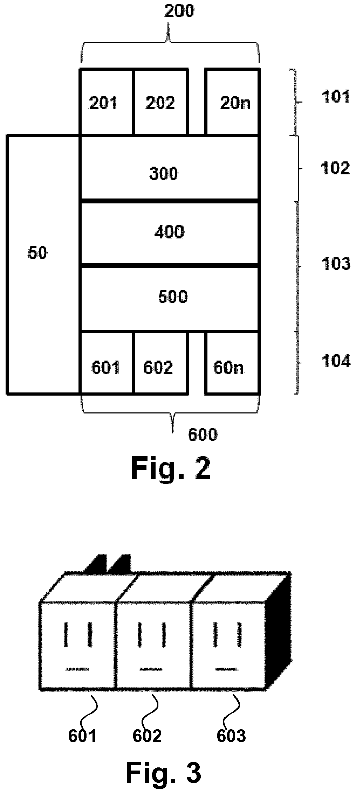

With reference now to Fig. 2 therein it is illustrated an embodiment of the system architecture. According to this embodiment the system comprises a set of components distributed along the above-described layers and a processing unit 50 in connection with the set of components to control operation thereof.

The set of components includes, at the Device Layer, or first layer 101, a plurality of energy interfaces 200 and some type of means (e.g. a module/input, a slot, etc.) to enable connection of an external configuration control module. The external configuration control module enables a user to configure parameters of the node such as schedules for power usage, priorities for meeting load demands if energy is scarce, price preferences, etc. It also enables the user to check on the status of the node and potentially aid in performing maintenance. Options also exist for the external configuration control module to connect wirelessly. In those cases, a separate wireless module connects at the Device Layer 101 to enable the external configuration control module to interact with the energy network. The external configuration control module may be used once to configure the system initially and need not be connected to the system all the time. For example, there could be one smart phone in a village that the community uses to configure and/or diagnose the individual nodes as needed.

Each one of the plurality of energy interfaces (201, 202..., 20n) are adapted and configured to receive and/or provide electrical energy from/to a device included in the node (i.e. to the electrical generation element, storage elements and loads). Because each device has a particular voltage level at which it is designed to operate, as well as type of current, AC or DC, each one of the plurality of energy interfaces (201, 202..., 20n) is configured to provide the electrical energy connection at a certain voltage level and at a certain type of current. Typical voltage levels are 5 V, 12 V, 24 V, 48 V, 120 V, and 240 V. In the system, each device presents a logical interface to the energy network that includes a unique device identification code (analogous to a MAC address in a communication network), and relevant information such as desired voltage, power draw, and other relevant parameters. The device may communicate this information over a dedicated control connection, or it can use the connections used to transfer the electrical energy. For example, the connection may be based on the common USB (universal service bus) interface, which is often used to exchange data between devices and send power in one direction.

The physical interfaces between the devices and the Trading Layer 102 are at the specific voltages appropriate to each device. The interface between the devices and the Trading Layer 102 is expandable to enable growth in the number of devices connected. A minimal interface allows for a few devices (e.g. 3 or 4), but enables expansion of both the control and electrical energy to tens of devices.

The set of components further includes, at the Trading Layer 102 one or more first electrical components 300, preferably electrical switches, to direct electrical energy from Voltage Converters 400 at the Network Layer 103 to the appropriate energy interface (201, 202..., 20n). The switches also include a control interface 20 so the control plane of the node can open and close connections to implement when and where to flow power.

At the Network Layer 103 is where the voltage conversion occurs. This may include converting from the voltage level used by storage to that used for a particular load (appliance), or from an electrical energy source to a load or to storage, or from (to) electrical energy received from (sent to) the energy network as part of a transaction with another node in the energy network. The trades both within a node and among network nodes are negotiated using control plane functions at the Trading and Network Layers 102, 103.

It is assumed that the energy network runs at a single voltage level (or if more than one, a limited number of levels). However, there may be multiple neighbor nodes of a node in the energy network. Consequently, present invention requires multiple interfaces to the network connections. And correspondingly, the lower half of the Network Layer 103 includes one or more second electrical components 500, preferably electrical switches, to connect each network interface into the appropriate Voltage Converter 400 to be passed to the desired destination (or source if electrical energy is flowing from the immediate node to a neighbor or neighbors). A Voltage Converter 400 may be programmable in terms of the voltages it converts between, or it can be designed to be fixed to the two voltages it converts between. It is important that devices expecting a specific voltage and neighbors expecting a specific voltage experience that voltage. The switch 500 uses control information about which electrical port 600 is providing energy to which device (load or storage), and which device (source or storage) is providing energy to which electrical port 600 to determine how to connect and configure the Voltage Converters 400. Multiple devices that are designed for the same voltage level can be connected to the same voltage converter if appropriate to the flow of electrical energy through the Network Layer 103.

The set of component in the Physical Layer 104 comprises the above-mentioned electrical ports 600 to connect to each neighbor node. These include the connections to transfer the electrical energy (a positive port and a negative port, as well as a ground if using voltages greater than 50 V), as well as a connection to exchange control information. The control information preferably includes a port ID and can be expanded to include other information if relevant. The set of component also include one or more instruments to measure the electrical energy flowing over the electrical ports. The basic embodiment of the invention includes as said instrument a separate voltage meter and a current meter at each electrical port 600 to measure the electrical energy flowing over that port. Using the current and voltage meters in combination with the control plane (through which nodes exchange statistics such as voltage and current readings at other end of connections), each node can estimate the losses experienced in transmission to/from a neighbor. In other embodiment, a device to configured both voltage and current can be used. Even, alternative to each electrical port 600 having its own instrument, the system can be implemented such that there is only one instrument (voltage meter and/or current meter) in the base and that periodically measures voltage and current for each electrical port 600 individually. This requires controlling the electrical energy flow such that it flows though only one electrical port 600 when measuring the flow, but can measure those statistics frequently enough to calibrate the system well.

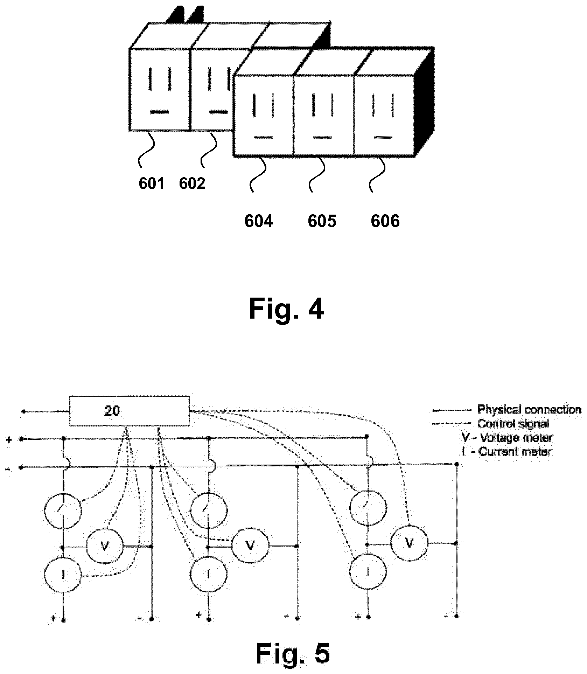

The external network connection is designed such that it can be expanded easily in terms of the number of neighbors. The electrical ports 600 have a number ranging between 2 and 5 ports. Fig. 3 illustrates a preferred example including three ports to enable to connect to three different neighbor nodes. As can be seen in the figure, each one of three electrical ports 601, 602, 603 comprises a casing having a four-sided shape. The casings are attached between them providing a hardware arrangement. The design of the hardware arrangement is such that a second copy of that component could plug into one of the ports to expand the number of ports from three to five (see Fig. 4). The hardware arrangement preferable has a locking mechanism to ensure it does not fall out or become loose if hit accidentally, as well as a sensor to notify the processing unit 50 whether the component is locked in place or not. Addresses can be hierarchical if the electrical ports 600 are stacked in this way (that is, one field of the address refers to the first electrical port used to connect to, and additional fields are added as units are appended). The switch 500 at the Network Layer 103 can send electrical energy to one or more of the electrical ports 600 by sending the appropriate control signals.

It is recommended that a distinct plug shape is used for different voltage levels to prevent a user from inadvertently connecting two nodes expecting different voltage levels. Fig. 5 shows some examples. Other options such as the standard USB interface or traditional outlet configurations are other examples. The cables or wires that connect to an electrical port 600 have the same interface as the electrical port expanders. In addition, the cable connections are such that they allow a user to expand the capacity (reduce resistance) of the wire by connecting additional wires to the connector. This could be by connecting a second cable to a second electrical port 600 and effectively have two connections between the same two nodes in the energy network. In that case, the processing unit 50 is configured to know that those two electrical ports 600 are always set the same.

The processing unit 50 includes the ability to monitor the usage of each device. The processing unit 50 commands the switches and Voltage Converters 300, 400, 500 to actuate at the appropriate times given input from a scheduler (i.e. a computing device/element) that specifies when electrical energy is to flow to where.

In an embodiment, the processing unit 50 also connects to a system status display (not shown). That display may comprise simple LED indicators, requiring a user to connect to the system with the external configuration control module in order to diagnose any warnings, or it may have a more expressive display that can provide detailed system status; it may be the actual configuration module, if desired.

The most basic implementation of the present invention consists of a single voltage converter 400 for the network connections and one or two energy interfaces 200 for devices (including the storage and appliances, and potentially a generator). The processing unit 50 monitors the node status and controls the flow of energy through the switches 300, 500.

While the description above implies that each device conforms to an application programming interface (API) such that it can interact with the control plane and exchange statistics and commands, present invention also allows for other appliances that do not have that control interface. If an appliance does not have such a control interface, the system can still provide it power, but it will not be able to include it in system optimizations such as scheduling future transmissions and may require manual initialization when first added to the system. Such non-smart devices can connect to the system as multiple devices on the same device-side port.

The basic system implementation then consists of one switch 300 at the Trading Layer 102 to switch between a battery and power source if they are operating at the same voltage. That switch 300 is connected to a Voltage Converter 400 if the device voltage differs from the network voltage, or it can be directly connected to the switch 500 of the Network Layer 103 if the voltages are the same. The non-smart appliances can have a direct connection to the Voltage Converter 400 (on the energy plane) since there is no control information to distinguish among the devices that would require a switch. The control plane of the appliances connect to the processing unit 50 in the case that the external configuration control module is connected to the system. The appliance voltage converter is then connected to the switch 500 of the Network Layer 103. There is one Network Layer switch 500 that connects to the external electrical ports 600, allowing electrical energy to flow to and from the appropriate neighbor nodes.

Alternatively to the aggregation of non-smart devices without any control information exchanged, an additional component, an appliance adapter(s) can be connected in between the appliance and the system to provide appropriate control information. This adapter is configured with the relevant statistics by the external configuration control module when they are both connected to the system. The adapter(s) then appears to the system as a smart appliance, with its unique ID, parameters such as voltage and power levels, statistics about usage, etc.

According to the goal of the system modularity and scalability, the basic system capabilities can be further expanded to include a smart switch for different appliances, and additional voltage levels on the device side, which would require additional voltage converters, or, possibly, a programmable voltage converter.

Although Fig. 1 shows four distinct layers, the invention can be implemented using more layers or fewer, as appropriate. For example, the four layers of the layered stack model could be collapsed into three by moving a routing component of the Network Layer 103 into the Trading Layer 102 and moving voltage conversion to the Physical Layer 104. Or, alternatively, the energy storage elements could be separated into a layer different from the energy generation elements and energy loads.

Moreover, it should be noted that the presence of energy generation elements and energy storage elements in a node is not mandatory. The basic configuration scheme of a node applies if there are only energy loads at the node, i.e. the one or more devices a node has need only to include some type of energy loads, e.g. a home appliance, such as a television, a microwave, etc. or lights or any type of refrigeration/heating system.

While the foregoing is directed to embodiments of the present invention, other and further embodiments of the invention may be devised without departing from the basic scope thereof. For example, other aspects may be implemented in hardware or software or in a combination of hardware and software.

The scope of the present invention is determined by the claims that follow.

## Claims

**1.** A system architecture for energy distribution in a node of a peer-to-peer energy network, wherein said node comprises a plurality of devices and is connected to one or more other nodes of an energy network in order to provide and/or receive electrical energy thereof, and wherein the node includes an energy plane and a control plane, **characterized in that** the system comprises:
a set of components including:
a plurality of energy interfaces (200), wherein each one of the plurality of energy interfaces (201, 202, ..., 20n) being adapted and configured to receive and/or provide electrical energy from/to a device of said plurality of devices;
one or more first electrical components (300) adapted and configured to direct electrical energy from at least one voltage converter (400) to the plurality of energy interfaces (201, 202, ..., 20n), the one or more first electrical components (300) including a control interface (20) adapted and configured to allow said control plane to open and/or close electrical energy connections;
one or more second electrical components (500) adapted and configured to provide electrical energy connection between a series of electrical ports (600) and the at least one of voltage converter (400);
said series of electrical ports (600) adapted and configured to provide electrical energy connection to said one or more other nodes through said energy plane, wherein the series of electrical ports (600) including connections to transfer electrical energy and connections to exchange control information;
at least one instrument adapted and configured to measure the electrical energy flowing over the electrical ports (600); and
means from which an external configuration control module is connectable; and
a processing unit (50) operatively connected to the set of components and adapted and configured to control operation thereof.

**2.** The system of claim 1, wherein the set of components being arranged at different layers (101, 102, 103, 104) of a stack model.

**3.** The system of claim 2, wherein:
the plurality of energy interfaces (200) and said means to enable connection of the external configuration control module being located in a first layer (101), at the top, of the stack model;
the one or more first electrical components (300) being located in a second layer (102) of the stack model, under the first layer (101);
the series of voltage converters (400) and the one or more second electrical components (500) being located in a third layer (103) of the stack model, under the second layer (102); and
the series of electrical ports (600) being located in a fourth layer (104) of the stack model, at the bottom under the third layer (103).

**3.** The system of previous claims, wherein the series of electrical ports (600) having a number of ports comprised in a range between 2 and 5 ports, preferably 3 ports, wherein each one of the electrical ports is adapted and configured to provide connection to a different neighbor node.

**4.** The system of claim 3, wherein each one of the series of electrical ports comprising a casing having a four-sided shape, the casings being attached between them providing a hardware arrangement.

**5.** The system of claim 4, wherein the hardware arrangement comprising a locking mechanism and a sensor configured to notify the processing unit whether the hardware component is locked.

**6.** The system of claim 1, wherein the system further comprising a display unit.

**7.** The system of claim 1, wherein each one of the plurality of energy interfaces (201, 202... 20n) being configured to provide said energy connection at a certain voltage level and at a certain type of current.

**8.** The system of claim 7, wherein said certain voltage level comprises one of 5 Volts, 12 Volts, 24 Volts, 48 Volts, 120 Volts and/or 240 Volts, and said certain type of current comprises alternating current or direct current.

**9.** The system of claim 1, wherein the one or more first (300) and second (500) electrical components comprising electrical switches.

**10.** The system of claim 1, wherein the at least one instrument being located at each electrical port of the series (601, 602...60x) of electrical ports (600).

**11.** The system of claim 1, wherein the at least one instrument being remotely connected to the series of electrical ports (600), said measurement being periodically performed for each electrical port (601, 602...60x) individually.

**12.** The system of claim 10 or 11, wherein the at least one instrument comprising a device to measure voltage and current or the at least one instrument comprising two different instruments, a device to measure voltage and a device to measure current.

**13.** The system of claim 1, wherein the external configuration control module being adapted and configured to provide configuration parameters of the node including schedule functions for power usage and/or priorities for meeting load demands if electrical energy is scarce, and optionally price preferences for providing/supplying electrical energy, and to provide status information of the node.

**14.** The system of claim 13, wherein the external configuration control module being physically connected or wirelessly connected, in the latter the system architecture further comprising a wireless communication module.

**15.** The system of claim 1, further comprising one or more adapters for the plurality of devices configured to provide control information thereof.
